# EUROPEAN PATENT APPLICATION

(11) **EP 4 818 118 A1**
(43) Date of publication of application: **07.10.2026**
(21) Application number: 25168527.7
(22) Date of filing: 04.04.2025
(51) Int. Cl.: C01B 32/05

(54) **BIOCHAR COATED WITH VEGETABLE OIL AND COMPOSITES COMPRISING COATED BIOCHAR**

(71) Applicant: Made of Air GmbH, 12053 Berlin (DE)
(72) Inventor: The designation of the inventor has not yet been filed
(74) Representative: Banse & Steglich Patentanwälte PartmbB

(57) **Abstract**

Subject of the invention is coated biochar, comprising biochar particles which are impregnated with a vegetable oil comprising triglycerides from unsaturated fatty acids. The coated biochar can be cured and used as a filler for composite materials, especially from plastic compounds. Subject of the invention are also composite materials comprising the coated biochar and production methods.

## Description

The invention relates to coated biochar, which is impregnated with a vegetable oil, and to composite materials, methods and uses thereof.

### State of the art

Various approaches are presently suggested and investigated for controlling the carbon dioxide content in the atmosphere. One particularly effective approach is the sequestration and long-term storage of carbon (dioxide) in functional materials. It is desirable that such functional materials can be easily and conveniently produced, are of practical use, and can store large amounts of carbon. In this regard, construction and building materials are of particular interest. Construction materials are used in large quantities, and the construction sector is responsible for a large proportion of the world's total carbon dioxide emissions. Building materials have the potential to store large amounts of carbon for long periods of time.

It has been proposed in the art to store carbon by incorporating carbon-based fillers into plastic materials. If such composites could be used for construction applications, carbon could be stored in large quantities for long periods of time. Various composite materials have been described in the art in which carbon-based fillers are incorporated into polymeric materials. In this context, a preferred carbon-based filler material is biochar. Biochar is the lightweight black residue of carbon and ash produced by the pyrolysis of biomass. Pyrolysis is partial thermal decomposition in an oxygen-controlled atmosphere. Biochar is widely used as a combustible and in agriculture to reduce runoff and increase soil fertility and crop yields. Because biochar is mostly composed of carbon from the atmosphere, it is an interesting material for carbon sequestration and storage. Compared to other carbon-storing organics, such as carbohydrates, biochar has a high recalcitrance, which prevents the decomposition and return of stored carbon to the atmosphere. A growing body of data shows that biochar can remain stable for hundreds of years under normal environmental conditions.

For a review of polymer composites with biochar filler, see Das et al. "Incorporation of Biochar to Improve Mechanical, Thermal and Electrical Properties of Polymer Composites," 2021, Polymers 13(16), 2663. However, such composites and methods for their production have several drawbacks that currently prevent or at least limit their widespread commercial use.

A common problem is that biochar powder is difficult to handle and process. For uniform compounding with polymers, biochar powder from particles in the lower micrometer range is required, which exhibits excessive dusting. Dust is a safety hazard to the user and can contaminate or even damage machinery and equipment used for processing and compounding. The low density of dusty biochar powder also makes it difficult to handle and prevents rapid processing.

Another problem is the high intrinsic hydrophilicity of biochar, which causes water absorption during biochar preparation, storage, and processing. When polymers are compounded with biochar at high temperature, the absorbed water is released and can cause hydrolytic degradation of polymers such as polyamide, polyethylene terephthalate or polycarbonate. Water release during compounding can also lead to degradation of additives such as polyvinyl alcohol or sodium silicate and reduce the stability of composite materials.

Another problem is that the compatibility of biochar particles with matrix polymers is generally low. As a result, it is usually difficult to produce uniform polymer/biochar compositions that are suitable for compounding. In many cases, it is not possible to produce a uniform and stable composite containing high levels of biochar.

In this regard, it is known in the art that biochar filler can improve certain mechanical properties of plastic composites. As described in Das, 2021, tensile strength and tensile modulus can be increased as increasing amounts of biochar filler are incorporated into such composites. However, it is a common problem that such composites containing biochar filler tend to become brittle and fracture easily. Accordingly, they have a low ability to absorb impact force or energy, as indicated by low impact strength. Brittle materials are not suitable for applications where high toughness and long-term stability are required, such as building or automotive parts. Therefore, it would be desirable to provide composites that contain significant amounts of biochar filler but have high toughness and impact strength.

There is a continuing need for improved and efficient materials and methods that overcome the problems of the prior art described above.

### Problem underlying the invention

The problem underlying the invention is to provide materials and methods that overcome the above problems. In particular, the problem is to provide composite materials that contain relatively high levels of biochar but are not brittle. The materials should be able to absorb stress without damage and thus have high impact strength. The materials should have a good environmental footprint and be capable of storing large amounts of carbon.

A further problem underlying the invention is to provide methods for producing such composite materials that are convenient, cost-effective and suitable for large-scale production. A particular problem is to provide improved materials and methods for handling, processing, compounding and storing biochar. The materials should be readily available at relatively low cost.

### Disclosure of the invention

Surprisingly, it was found that the problem underlying the invention is overcome by coated biochar, composite materials, methods and uses according to the claims. Further embodiments of the invention are outlined throughout the description.

Subject of the invention is a coated biochar, comprising biochar particles which are impregnated with a vegetable oil comprising triglycerides from unsaturated fatty acids. As used herein, the term "coated" means that the vegetable oil is present at least on the surface of the biochar particles. Typically, the vegetable oil is also in the pores of the coated biochar. The coated biochar is obtained by impregnating a biochar powder with the vegetable oil. Impregnation is a process in which the powder is combined with the vegetable oil in liquid form and mixed. During impregnation, the vegetable oil covers the external surface of the biochar. Typically, the vegetable oil also infiltrates the pores of the biochar and covers the internal surface of the biochar and/or fills the pores. A uniform coating and infiltration of the biochar pores can be achieved by adjusting process parameters such as the amount of vegetable oil, the temperature and the degree and means for mixing. The filling of the biochar pores increases the bulk density of the biochar, which can reduce dusting and be advantageous for handling. Moreover, it was found that handling of the biochar can be facilitated, because the flowability of the coated biochar is improved. It is a further advantage that the water uptake of the coated biochar is significantly reduced. By coating, infiltration and optionally curing, the vegetable oil can be intimately bonded to the biochar particles, which can also advantageously increase the toughness of composite materials which include the coated biochar in the form of a filler.

The biochar is coated with at least one vegetable oil. Vegetable oils (vegetable fats) are mixtures of triglycerides, which can be obtained from seeds or other parts of plants, often edible plants. A triglyceride is an ester of glycerol and three fatty acids. A fatty acid chain is monounsaturated if it contains a single double bond, and polyunsaturated if it contains two or more double bonds. In the vegetable oil used for coating the biochar, at least a portion of the triglyceride fatty acids is unsaturated.

In a preferred embodiment, the vegetable oil is at least partially cured. The term "curing" (hardening) relates to a cross-linking process, in which triglyceride molecules react with each other and typically also with the biochar surface. Overall, curing provides a polymerization of the coating, such that a stable network is formed. When the vegetable oil is cured, the positive effects of the coated biochar regarding handling, processing and stabilization of composite materials can be especially pronounced.

Preferably, the vegetable oil is solidified. This is advantageous, because the coated biochar becomes less sticky, and can be handled more conveniently. Solidification can be mediated by decreasing the temperature and/or at least partial curing of the vegetable oil coating.

Preferably, the vegetable oil has a relatively high degree of unsaturation. This means that the average amount of carbon double bonds in the fatty acid chains is relatively high. In a preferred embodiment, the vegetable oil has a degree of unsaturation of at least 2%, preferably between 2% and 10%. The degree of unsaturation can be calculated from the iodine number, which is determined by titration. As used herein, the degree of unsaturation relates to the natural vegetable oil, before a potential modification as described further below. According to the invention, it was found that the use of vegetable oil comprising unsaturated fatty acid side chains can be advantageous for preparing stable composite materials. A high degree of unsaturation is advantageous, because more reactive sites for cross-linking are available. Thus, a denser network of triglycerides can be formed, which increases the stability of the coating. Further, covalent bonds can be formed between the biochar and vegetable oil, and potentially also to the matrix polymer in a composite material.

In a preferred embodiment, the vegetable oil is soybean oil, linseed oil, rape seed oil, castor oil, sunflower oil, canola oil or a combination thereof. More preferably, the vegetable oil is soybean oil or linseed oil. Such oils are advantageous, because they are available in relatively high amounts at relatively low costs, and have high degrees of unsaturation.

The vegetable oil can be cured (hardened) by reactions of the carbon double bonds of the fatty acid chains. This reaction is usually rather slow, but may be enhanced by radiation, oxygen and/or heat. Preferably, the vegetable oil is derivatized such that the curing reaction is more effective. Preferably, the vegetable oil carries at least one reactive functional group, which is preferably positioned at the sites of carbon double bonds of fatty acid side chains. Typically, only a portion of the carbon double bonds of the fatty acid side chains is modified with such reactive chemical groups.

Such a derivatized vegetable oil can undergo more effective curing. In this regard, the curing can be accelerated and/or a denser and more stable polymer network can be formed. For example, the reactive functional group can be an epoxy, amine, or isocyanate group. The substrate vegetable oil, typically natural vegetable oil, can be derivatized with the reactive functional group by known chemical methods. A high degree of unsaturation of the vegetable oil can be advantageous, because more reaction sites are available for attaching reactive functional groups. Modified vegetable oils with reactive functional groups are commercially available.

In a preferred embodiment, the vegetable oil is epoxidized. Upon epoxidation, at least a portion of the triglyceride carbon double bonds are converted into epoxy groups. It was found that epoxidized vegetable oil is especially suitable for efficient curing, and can provide coated biochar filler and also tough composite materials with advantageous properties. Epoxidized vegetable oils are also advantageous, because the curing reaction can be conveniently controlled by adjusting process parameters such as reaction time, temperature or amounts of additives, such as catalysts.

In a preferred embodiment, the coated biochar comprises a crosslinker which has been reacted in the curing reaction. Preferably, the crosslinker is used in combination with a vegetable oil with reactive functional groups, especially epoxidized vegetable oil. It was found the coated biochar, in which the vegetable oil is cured with a crosslinker, is especially suitable for preparing tough composite materials which have high impact resistance. A crosslinker can support curing of the vegetable oil by reacting with the fatty acid carbon double bonds and/or functional groups, such as epoxy groups, such that two or more triglyceride molecules are cross-linked. In a preferred embodiment, the crosslinker is an organic compound which comprises at least two reactive groups, preferably anhydride, acid or amine groups. More preferably, the crosslinker is a polycarboxylic acid or polycarboxylic acid anhydride, for example comprising 2 to 4 carboxylic groups, which is preferably unsaturated, i. e. comprises also at least one carbon double bond. Most preferred is maleic anhydride. In a preferred embodiment, the polycarboxylic acid or polycarboxylic acid anhydride is used in combination with a polyol, such as butanediol, preferably 1,3-butanediol. Especially preferred is a combination if maleic anhydride and butanediol.

In a preferred embodiment, the composition used for impregnating the biochar comprises a catalyst. The catalyst can support the curing reaction. Preferably, the catalyst is an amine, such as triethylentetramine (TETA) or dimethylbenzylamine (DMBA).

In a preferred embodiment, the composition used for impregnating the biochar comprises epoxidized vegetable oil, preferably epoxidized soybean oil, maleic anhydride, a polyol, preferably butanediol, and optionally a catalyst, such as dimethylbenzylamine. Such a curable system is described in España et al., 2012, J. American. Oil. Chem. Soc. 89, 2067 to 2075.

The coated biochar can have a desired shape and form, such as a granulate, powder or shaped material. Preferably, biochar particles in the coated biochar are agglomerated. Preferably, the coated biochar is in the form of a granulate, from granules comprising each a plurality of biochar particles. In the impregnation process, the biochar particles tend to agglomerate if the vegetable oil is viscous and sticky. Therefore, a granulate can conveniently be formed by conventional granulation methods and devices. A granulates is advantageous, because the coated biochar can be packed, handled and processed conveniently when being used as a filler for compounding. In another embodiment, the coated biochar is provided in the form of a shaped material, such as pellets or blocks. For example, the impregnated biochar can be pressed into a solid shape, before the coating solidifies. Such shaped materials can be advantageous for storing and transportation, and can be disassembled during or before compounding.

The inventive coated biochar is based on biochar. Biochar is a lightweight carbon-based material obtained by pyrolysis of biomass, such as wood or other plant material. Pyrolysis is partial thermal degradation of the biomass in an oxygen-controlled atmosphere. The biochar can be grinded or milled into fine powder. Preferably, the biochar is from wood. Biochar is characterized by its high ¹⁴C isotope level, which distinguishes it from carbonaceous materials from fossil origin, such as fossil coal.

The coated biochar can advantageously be used as a filler for composite materials. Biochar storage can sequester carbon from the atmosphere. The use of biochar filler in composite materials is advantageous for environmental reasons, because large quantities of carbon can permanently be sequestered. An amount of 1 kg biochar contains approximately 680 to 820 g carbon, which is equivalent to about 2.5 to 3 kg carbon dioxide. When biochar is included into a stable composite material, the atmosphere can permanently be depleted from an equivalent amount of carbon dioxide. This has a relevant environmental impact, because inventive composites can be stable and used for large-scale application, for example as building parts in construction.

In a preferred embodiment, the biochar particles are relatively fine. Preferably, the average particle size is 1 µm to 500 µm, more preferably 5 µm to 150 µm. In a preferred embodiment, the biochar particles have particle sizes in the range of 1 µm to 500 µm, preferably between 5 µm to 100 µm. Preferably, the maximum particle size is smaller than 100 µm, or smaller than 67 µm. Particle size can be determined according to DIN ISO 2591-1:1988. It was found that biochar powder from such small particles can efficiently be impregnated and coated, and integrated into composite materials in high amounts. In the art, it was considered difficult to handle fine biochar powders especially with particles <100 µm, and use them effectively as filler materials, because of the low density and high dustiness.

In a preferred embodiment, the coated biochar comprises 60 to 95 wt.% biochar and 5 to 40 wt.% vegetable oil, more preferably between 70 to 90 wt.% biochar and 10 to 30 wt.% vegetable oil. The amount of vegetable oil is preferably adjusted such that it permeates the biochar pores effectively and is fully adsorbed in the biochar impregnation process.

According to the invention, it was found that an advantageous filler for composite materials can be prepared solely from biochar and the vegetable oil as the structural components. Preferably, no other carrier besides the biochar is comprised and/or no other structural coating compound besides the vegetable oil is comprised. In a preferred embodiment, the coated biochar consists of biochar particles, vegetable oil, and optionally additives, for example up to 10 wt.%. In an embodiment, the additives are functional additives, such as processing aids, compatibilizers, colorants or preservatives, which preferably do not react with the vegetable oil.

Subject of the invention is also a method for preparing the inventive coated biochar, comprising the steps of
(a) Providing a composition comprising biochar powder and the vegetable oil,
(b) Mixing the composition, and
(c) Heating the composition.

In a preferred embodiment, the composition in step (a) comprises the crosslinker and/or catalyst, and optionally further additives. The composition is mixed in step (b) and heated in step (c), wherein the composition is preferably heated during mixing.

In general, moderate heating in step (c) to a temperature of up to 90°C can support mixing and impregnation. In a preferred embodiment, the heating step (c) comprises heating at a temperature at which the vegetable oil can permeate into the pores of biochar particles, preferably between 50°C and 90°C. This heating for permeation can be carried out as a pre-heating step before curing. Such moderate heating can reduce the viscosity of the vegetable oil, such that it can permeate and fill the biochar pores more effectively. The temperature is adjusted such that the composition can conveniently be processed and the coating becomes uniform.

In a preferred embodiment, the heating step (c) comprises heating at a temperature at which the vegetable oil is at least partially cured, typically above 100°C, preferably between 100°C and 150°C. Preferably, such heating for curing is carried out after impregnation and mixing, more preferably after a pre-heating step at lower temperature at which the biochar is impregnated. Depending on the type of oil and biochar, the curing temperature can be adjusted such that a desired degree of curing is obtained. In an embodiment, the vegetable oil is fully cured, which can be advantageous for stability, handling, storing and processing of the coated biochar. In another embodiment, the vegetable oil is partially cured. This can be advantageous, because curing can be completed later during compounding with the matrix polymer, preferably such that bonds are also formed between the matrix polymer and coated biochar. Such a two-step curing can yield a more stable and intimate connection of the coated biochar with the polymer matrix.

Preferably, in step (c) the coated biochar is obtained. Preferably, the coated biochar is dry, i.e. the vegetable oil is solidified. Preferably, the initial amount of vegetable oil is adjusted such that all the oil is coated. It is preferred that the process is solvent-free. According to the invention, an efficient impregnation and coating can be carried out simply by adding the vegetable oil, optionally with additives, to the biochar powder. This is advantageous, because there is no need for a drying step in which solvent is removed, and the overall process is simple and convenient.

Subject of the invention is also a composite material comprising a matrix polymer and the inventive coated biochar. The composite material comprises a polymer matrix, in which the coated biochar is distributed. Preferably, the biochar particles are uniformly dispersed within the composite. Preferably, the matrix polymer is an organic polymer and/or the composite material is a plastic material. A composite material is obtainable, which can be provided in defined form, has high mechanical stability, and can comprise a high level of biochar filler which is evenly dispersed in a polymer matrix.

According to the invention, it was found that composite materials which include the coated biochar as a filler can have high mechanical stability, even when high ratios of biochar are included. Especially, it was found that the composite material can have high toughness and impact strength, and thus does not tend to be brittle. This is highly advantageous, because the composite material is not easily ruptured when being subjected to an impact. Such shaped objects are highly suitable for construction applications, which require toughness and long-term stability. Without being bound to theory, it is assumed that the toughness may be achieved because the coated biochar pores can be effectively filled with cured vegetable oil, thereby increasing the internal strength of the filler particles and overall composite. Further, it is assumed that the biochar coating can improve the compatibility between the filler particles and the matrix polymer in the compound. These effects are especially pronounced if the coating on the biochar is efficiently cured, especially when the vegetable oil comprises functional reactive groups and the coating comprises a crosslinker.

Preferably, the matrix polymer is thermoplastic or thermoset. Preferably, the polymer can be moulded. For example, the polymer can be a polyamide, polyolefin, such as polyethylene or polypropylene, polyester, polyurethane, silicone, acrylic polymer or rubber, or a copolymer or mixture thereof. Preferably, the polymer is a synthetic polymer, which can be advantageous for moulding. Preferably, the polymer is recycled and/or bio-based, which is advantageous for the environmental balance of the composite.

In a preferred embodiment, the polymer is thermoplastic. The composite can be prepared from a melt of the thermoplastic polymer, in which the coated biochar is dispersed. For example, the thermoplastic polymer can be polyolefin, polyamide, acrylonitrile butadiene styrene (ABS), polylactide, or mixtures thereof. Preferably, the thermoplastic polymer is polyethylene, polypropylene or polyamide. Since the coated biochar is highly compatible with such thermoplastic polymers, composite materials with good mechanical properties can be obtained therefrom by conventional thermoplastic processing methods such as extrusion or moulding.

In a preferred embodiment, the polymer is hydrophobic. Since the coated biochar is compatible with hydrophobic polymers, such as polyolefins and polyamides, stable composites can be produced from such polymers which comprise high levels of biochar.

In another preferred embodiment, the polymer is a polyolefin, such as polyethylene or polypropylene. Preferably, the thermoplastic polymer is polyethylene, more preferably high-density polyethylene (HDPE). This is advantageous, because polyethylene is available in high amounts at low costs and can be recycled conveniently. Thus, respective materials are suitable for large scale building applications and permanent carbon storage.

In a preferred embodiment, the polymer is susceptible to hydrolysis. The coated biochar is especially suitable as a filler for such polymers, because it can have a relatively low water content, thereby preventing water release and hydrolytic degradation of the polymer during compounding. Preferably, the thermoplastic polymer is a polyamide, for example an aliphatic polyamide, polyphthalamide or aromatic polyamide. Preferably, the polyamide is aliphatic, such as PA6 or PA66. Such polyamides are susceptible to hydrolysis and can be stabilized by the coated biochar filler, such that the composite material can remain stable over long time periods.

In another embodiment, the organic polymer is a thermoset, such as rubber. Thermosets comprise reactive groups for curing. The reactive groups, such as epoxy, vinyl, diene or silyl groups, or sulfur in any form, can form covalent bonds upon curing. Thereby, the polymer is crosslinked and forms a covalent matrix.

In a preferred embodiment, the organic polymer is not curable and/or cured. Preferably, the polymer does not comprise reactive groups such as hydroxyl, carboxyl or amine groups, which are reacted when the biochar and shaped object are prepared. According to the invention, stable composite materials can be obtained even when the polymer is not cured. This is advantageous, because systems with curable polymers are generally more complicated and more difficult to control; and the products are more difficult to recycle.

In a preferred embodiment, the organic polymer is not hydrophilic, and does not comprise hydrophilic functional groups, such as hydroxyl groups. Preferably, the organic polymer is not a naturally polymer, such as cellulose or starch. Such hydrophilic organic polymers are typically processed from aqueous solutions, and thus cannot be moulded conveniently.

Depending on its intended use, the biochar can be included into the composite in a desired amount. The composite material may comprise at least 5 wt.%, preferably at least 20 wt.%, more preferably at least 30 wt.%, or even at least 40 wt.% biochar. Preferably, the composite material comprises up to 60 wt.%, more preferably up to 80 wt.%, or even up to 90 wt.% biochar. It is preferred that the composite comprises from 10 wt.% to 90 wt.%, or from 20 wt.% to 80 wt.% biochar. In these embodiments, the amounts in wt.% relate to biochar only, without coating.

In a preferred embodiment, the composite material comprises 20 to 94 wt.% matrix polymer, 5 to 80 wt.% biochar, and 1 to 25 wt.% vegetable oil, more preferably 30 to 70 wt.% matrix polymer, 27 to 67 wt.% biochar, and 3 to 20 wt.% vegetable oil.

In an embodiment, the composite material is not porous, i.e. the polymer matrix does not comprise pores. However, the biochar particles may comprise micropores. Such a dense material can be advantageous for storing high amount of carbon per volume; and the stability and barrier properties can be high.

In an embodiment, the composite material can comprise at least one additional filler or reinforcement, which is different from the modified biochar. Additional fillers could be added for modifying the properties, for example colour pigments or conductive particles. Fibres, such as glass or carbon fibres, can be added for increasing and modifying mechanical stability. Preferably, the amount of additional fillers and/or reinforcements is less than 20 wt.%, preferably less than 10 wt.%, for example in the range of 1 to 20 wt.% or 2 to 10 wt. %.

The composite material may comprise at least one additive, which is not a structural polymer, filler or reinforcement. For example, the additive can be selected from processing aids, such as lubricants, plasticizers, colorants, flame retardants, thermal stabilizers and compatibilizers. Lubricants can improve workability during compounding. For example, the processing aid can be a fatty acid salt, such as zinc or calcium stearate, which is for example available under the trademark Ligastar (Peter Greven, DE).

Functional additives may confer desired properties to the composite material and shaped object, such as colour or stability. Preferably, the amount of additives is up to 5 wt.% or up to 2 wt.%, for example in the range of 0.01 to 5 wt.% or 0.1 to 2 wt. %.

It is advantageous that the composite material and/or shaped object can have high toughness. Preferably, the Izod impact strength is at least 1.8 kJ/m², more preferably at least 2.2 kJ/m², as determined by ISO180:2023. The high toughness is advantageous for building applications, because the material can withstand mechanical stress.

Subject of the invention is also a shaped object, which comprises or consists of the composite material of the invention as outlined above. A shaped object is a three-dimensional object (body, part) having a defined form. The shape is deliberately conferred to the object in the production process, preferably by moulding. Thus, the shape is not random. For example, the shaped object can be a brick or panel. The object can also be shaped after moulding, for example by cutting.

The shaped object is suitable for a wide range of uses, such as construction, furniture or transport applications, such as automotive application. Preferably, the shaped object is a construction component, such as a panel, insulation board, building part or building block. Construction applications include constructional engineering and architecture. A panel is a flat object for covering a building surface, such as a wall, floor or furniture surface. The use as a panel is advantageous because of the high stability of the composite material.

The shaped object may comprise at least one further component or material. For example, it can be a laminate from two, three or more layers. In a preferred embodiment, the shaped object comprises a coating. For example, a functional coating can confer a desired property to the shaped object. The coating may confer colour and/or texture to the surface. The coating could be protective, for example against moisture, UV radiation, mechanical damage or weathering. Since biochar confers a dark colour to the composite material, a coloured coating may be applied. Coatings can be applied by conventional means, such as liquid coating, for example with resins, impregnation, electron scattering (Trespa process), physical or chemical vapor deposition.

Subject of the invention is also a method for preparing the inventive composite material, comprising the steps of
(i) providing a composition comprising a matrix polymer and the inventive coated biochar,
(ii) compounding the composition, and
(iii) consolidating the composition.

Typically, the composition of step (i) is intimately mixed, for example in a static mixer or extruder. The composition can be a liquid or paste. The viscosity can be adjusted by heating. In step (ii), the composition is compounded, typically extruded or moulded. Upon moulding, the composition is filled into the moulding form and subjected to heat and pressure. The temperature for compounding can be between 120°C and 250°C, for example between 140°C and 180°C, depending on the matrix polymer. Devices and methods for compounding and moulding polymers are commercially available and known in the art. In step (iii), the product is consolidated, thereby obtaining the composite material and/or shaped object. Depending on the type of composition, the product may be dried and/or fully cured. The final shape can be conferred to the shaped object by further processing after compounding, for example by cutting. Preferably, a plurality of objects is prepared, which have the same shape and are suitable for large scale applications. Preferably, the process is continuous, which is advantageous for large scale application.

Subject of the invention is also the use of the inventive coated biochar as a filler for polymer compounds.

The coated biochar, composite materials and methods solve the problem underlying the invention. A coated biochar is provided which can be handled, stored, processed, and especially compounded with plastic materials conveniently and effectively. The coated biochar can have high density and low dusting, good flowability and low moisture uptake. The low water uptake of the coated biochar can greatly increase the applicability as a filler in plastic materials, by allowing for combination with polymer materials that are susceptibility to hydrolytic degradation during compounding. The good handling properties of the biochar allow a higher throughput in compounding.

Moreover, composite materials which include the coated biochar as a filler can have advantageous properties. They can have a high toughness, as indicated by a high impact strength. The composite materials can include high levels of biochar filler and can be used for a wide range of applications. They are especially suitable for construction applications which allow long-term storage of carbon from the atmosphere.

### Examples

### Materials

Woody lignocellulosic biochar produced from spruce was used, ground and sieved to a particle size distribution between >0 to 1000 microns. The biochar was dried in an oven to reach moisture content ≤ 6 % before use. Epoxidized soybean oils (ESBO), Maleic anhydride (MA), 1,3-butanediol anhydrous, Triethylenetetramine (TETA), triethylenetetramine (TETA) and dimethylbenzylamine were obtained from Sigma Aldrich, DE. HDPE with an MFI of 7.2 g/10min was obtained from Braskem, US (trademark SHC7260).

### Examples 1 to 3: Preparation of coating compositions

### Example 1: Epoxidized soybean oil binder with maleic anhydride

Epoxidized soy bean oil (ESBO) was heated to 60°C and mixed with the crosslinker MA in different ratios between 1:0.4 and 1:1.4. These mixing ratios were obtained by considering the number of reactive equivalents of both species. Mixing of the components was carried out using a magnetic stirrer at a temperature of 60°C to melt and dissolve the MA flakes in the ESBO. After the mixing process, 1.5 % to 3.5% by weight of 1,3-butanediol anhydrous and 1% to 3.5% by weight of dimethylbenzylamine were added to the mixture while maintaining the temperature at 60°C, before stirring for additional 10 minutes to ensure that the mixture was homogenized.

### Example 2: Epoxidized soybean oil binder with dimethylbenzylamine

ESBO was heated to 60°C and mixed with 3 wt.% - 7 wt.% dimethylbenzylamine (DETA) as a catalyst at 100°C for 5 min using a mechanical stirrer.

### Example 3: Epoxidized soybean oil binder with triethylenetetramine

ESBO was heated to 60°C and mixed with 3 wt.% - 7 wt.% triethylenetetramine (TETA) as a catalyst at 100°C for 5 min using mechanical stirrer.

### Example 4: Biochar impregnation

Biochar powder was impregnated with coating compositions of examples 1 to 3 above. Another sample was prepared in which biochar powder was impregnated with the epoxidized soybean oils (ESBO) without additives. Coating experiments were carried out at 80°C in a flask with overhead stirrer. The rotational speed of the stirrer could be altered between 0 - 500 rpm. Biochar (50 g) was placed in a flask on a magnetic heater while an overhead stirrer was used to mix the components at the desired rotational speed for 60 sec. Following this step the resin was added stepwise to the biochar. For each experiment, the liquid coating composition was pre-weighed to achieve a targeted ratio of coating composition to biochar, and was mixed for approximately 10 min. After the defined mixing time, the coated biochar was quickly removed from the flask and heated in an oven at 150°C for 24 h to cure the coating composition on the biochar. A vacuum oven was used for some of the samples to increase the impregnation of the pores of the biochar. After curing, the biochar was collected for further analysis and for compounding with HDPE. The conditions for the mixing of the biochar and resin were as follows:

| Rotational speed (rpm) | Curing temperature | Pre-mix time | Coating time |
|---|---|---|---|
| 100-500 rpm | 150°C | 1 min | 10-20 min |

### Examples 5 to 10: Compounding and preparation of composite materials

The coated biochar samples from example 4 above were compounded with HDPE (MFI 7.2 g/10 min). For comparison, compounds were also prepared from HDPE and the biochar powder without coating (examples 5, 6). The compounding was carried out at a weight ratio of HDPE to coated biochar of 50 : 50, with the addition of 0.6% lubricant (zinc stearate, Ligastar, Peter Greven, DE) in a Brabender kneader. During compounding, any uncured coating composition within the biochar is further cured. 24 g of HDPE and 0.28 g of lubricant were fed into the kneader and mixed for 4 min to ensure that the polymer was fully melted. 24 g of coated biochar fines are introduced into the kneader slowly and mixed for 6 min to ensure the homogenous distribution of the biochar and the additional curing of uncured resin. The obtained compound is the composite material. It was shredded into smaller pellets before pressing using compression moulding into a 100 x 100 mm sample with a heat press. Conditions for compounding were as follows:

| Torque speed | Time | Temperature | Material amount |
|---|---|---|---|
| 60 rpm | 10 min | 170°C | 48.28 g |

Process parameters for pressing were as follows:

| Pre-heating temp. | Press temperature | Pressing pressure | Pressing time |
|---|---|---|---|
| 110°C | 150°C | 250 kN | 5 min |

Once the compounded material is pressed, samples for mechanical testing were cut into the required samples dimensions for further characterization. The results and properties of the composite materials are summarized in table 1. The following characterization methods were used:
Tensile strength and Tensile modulus: Tensile test specimens were cut out of composite material samples using a CNC. Tensile samples were tested with a UTM according to the ISO527:2019 standard.

Impact strength: Impact test specimens were cut out of composite material samples using a CNC machine. Notched Izod impact samples were tested according to ISO180:2023 standard.

Bulk density: For the determination of bulk density ρb, biochar granules were filled into a 250 ml cylinder, before ρb was calculated from the mass of bulk granules (Wg, g) divided by the volume. The bulk density of each sample was measured twice.

Moisture absorption: The moisture absorption behavior of biochar samples was explored at constant temperature and humidity in an incubator. At the beginning of the testing process, the biochar sample were dried in the oven at 80°C, and then put into the incubator at 23°C temperature and a constant relative humidity of 60%. The mass of the granules was measured every 24 h until the mass reached constant. The percentage moisture uptake after 72 h was determined.

Dustiness: The percentage of dustiness of biochar samples was quantitatively assessed through visual inspection, with reference to the biochar without coating which is presumed 100% dusty.

Flowability: The flowability is measured based on maximum torque on kneader after adding biochar samples compared to the reference biochar without coating.

The results in table 1 demonstrate that the inventive coated biochar samples, which are impregnated with the vegetable oil, have advantageous properties when compared to the biochar without coating (examples 5, 6). The dustiness is lower and the flowability is higher. The significantly higher bulk density of the coated biochar suggests that the internal pores of the biochar are filled with the vegetable oil at least partially. The inventive coated biochar also has a significantly lower moisture content, whilst the moisture uptake after 72 hours is less than half as for comparative biochar without coating. This is highly advantageous, because moisture uptake causes undesirable changes of various properties. For example, the coated biochar is more resistant to clumping and can be stored more conveniently.

When the coated biochar is used as a filler, stable composite materials are obtainable, because undesirable water release during compounding is significantly reduced because of the low moisture content. Moreover, the results demonstrate that composite materials that comprise the coated biochar as a filler can have high impact strength, which is correlated to high toughness and rupture resistance. This is advantageous for applications in which long-term stability is required, for example for construction or automotive applications.

Notably, the tensile strength and tensile modulus of inventive composite materials can be lower than for comparative materials without biochar coating. However, it is generally expectable that tough materials have lower tensile strength. The composite materials are suitable for applications such as building or construction parts, in which impact resistance is highly relevant, because the absolute tensile strengths meet the requirements. Overall, the results demonstrate that the problem described in Das, 2021, that composites with higher quantities of biochar fracture earlier and show semi-brittle behavior under tensile stress, can be overcome by inventive composite materials.

**Table 1: Results of examples 5 to 10 and properties of the composite materials. Examples 5 and 6 are comparative. Ratios in [%] are provided for dry weight of components.**

| Example | Coated biochar | | | | | | | Compound | | | |
|---|---|---|---|---|---|---|---|---|---|---|---|
| | Coating type | Ratio biochar/coating | Bulk density | Initial moisture content | Moisture uptake after 72 hours | Flowability | Dustiness | Ratio HDPE /BC / coating | Average tensile strength | Average tensile modulus | Average impact strength |
| | | [%] | [g/cm³] | [%] | [%] | | | 50/50/0 | [N/mm²] | [N/mm²] | (KJ/m²] |
| 5 | none | 100/0 | 0.26 | 1.71 | 13.3 | low | 100 | 60/40/0 | 17.9 | 2782 | 1.66 |
| 6 | none | 100/0 | 0.26 | 1.71 | 13.3 | low | 100 | 50/40/10 | 16.0 | 2298 | 1.84 |
| 7 | ESBO | 100/20 | 0.37 | 1.5 | 6.5 | medium | 90 | 50/40/10 | 7.3 | 1142 | 1.68 |
| 8 | ESBO + MA | 100/20 | 0.41 | 1.44 | 5.3 | high | 90 | 50/40/10 | 14.9 | 2096 | 2.34 |
| 9 | ESBO + DETA | 100/20 | 0.39 | 1.21 | 6.3 | high | 85 | 50/40/10 | 13.2 | 2079 | 1.39 |
| 10 | ESBO + TETA | 100/20 | 0.43 | 1.43 | 6.4 | high | 85 | 50/40/10 | 10.3 | 1575 | 1.87 |

## Claims

1. Coated biochar, comprising biochar particles which are impregnated with a vegetable oil comprising triglycerides from unsaturated fatty acids.

2. The coated biochar of claim 1, wherein the vegetable oil has a degree of unsaturation of at least 2%, preferably between 2% and 10%.

3. The coated biochar of at least one of the preceding claims, wherein the vegetable oil is at least partially cured.

4. The coated biochar of at least one of the preceding claims, wherein the vegetable oil carries a reactive functional group, wherein the vegetable oil is preferably epoxidized.

5. The coated biochar of at least one of the preceding claims, wherein the coating is crosslinked with a crosslinker.

6. The coated biochar of at least one of the preceding claims in the form of a granulate, powder or shaped material.

7. The coated biochar of at least one of the preceding claims, comprising 50 to 95 wt.% biochar and 5 to 50 wt.% vegetable oil.

8. A method for preparing a coated biochar of at least one of claims 1 to 7, comprising the steps of
(a) Providing a composition comprising the biochar powder and the vegetable oil,
(b) Mixing the composition, and
(c) Heating the composition.

9. The method of claim 8, wherein the heating in step (c) comprises heating at a temperature at which the vegetable oil can permeate into the biochar particles, preferably between 50°C and 90°C, and/or
heating at a temperature at which the vegetable oil is at least partially cured, preferably between 100°C and 150°C.

10. A composite material comprising a matrix polymer and coated biochar of at least one of claims 1 to 7.

11. The composite material according to claim 10, wherein the matrix polymer is thermoplastic, wherein the matrix polymer is preferably polyethylene, polypropylene or polyamide.

12. The composite material of at least one of claims 10 and 11, comprising 20 to 95 wt.% matrix polymer, 5 to 80 wt.% biochar, and 1 to 25 wt.% vegetable oil.

13. A shaped object, comprising a composite material of at least one of claims 10 to 12, wherein the shaped object is preferably a building part.

14. A method for preparing a composite material of at least one of claims 10 to 12, comprising the steps of
(i) providing a composition comprising a matrix polymer and the coated biochar,
(ii) compounding the composition, and
(iii) consolidating the composition.

15. Use of a coated biochar of at least one of claims 1 to 7 as a filler for composite materials, especially plastic materials.
